# FASCICULE DE BREVET EUROPEEN

(11) **EP 2 204 342 B1**
(45) Date de publication et mention de la délivrance du brevet: **22.06.2011**
(21) Numéro de dépôt: 10150077.5
(22) Date de dépôt: 05.01.2010
(51) Int. Cl.: B65G 47/08, B65G 47/82

(54) **Procédé de groupage de produits du genre flacons ou autres**
Verfahren zum Gruppieren von Flaschen
Method for grouping bottles

(30) Priorité: 06.01.2009 FR 0950043
(43) Date de publication de la demande: 07.07.2010
(73) Titulaire: Sidel Participations, 76930 Octeville sur Mer (FR)
(72) Inventeur: Mougin, Didier, 76930 Octeville sur Mer (FR); Begin, Michel, 76930 Octeville sur Mer (FR); Duchemin, Guillaume, 76930 Octeville sur Mer (FR); Poupon, Christophe, 76930 Octeville sur Mer (FR)
(74) Mandataire: Cabinet Plasseraud

(56) Documents cités:
- EP-A- 1 052 200
- EP-A- 1 847 488
- FR-A- 2 847 242

## Description

La présente invention concerne un procédé de groupage de produits en vue de leur encaissage, par exemple ; elle concerne également l'installation qui permet sa mise en oeuvre.

Le groupage de produits du genre flacons, bouteilles ou autres, peut s'effectuer de plusieurs façons selon le type et la nature des produits et aussi selon les cadences souhaitées.

Une forme de groupage est décrite dans le document GB 2174667. Les produits arrivent en ligne sur un convoyeur d'amenée et ils sont pris en charge, à la volée, par un dispositif poussoir qui emporte un lot de produits.

Ce dispositif poussoir se présente sous la forme d'une crémaillère qui est disposée longitudinalement, sur le côté de la ligne de produits. Cette crémaillère est animée d'un mouvement combiné en boucle : à la fois un mouvement longitudinal dans le sens d'avancement des produits et un mouvement transversal, pour déposer le lot de produits en rang, sur le côté du convoyeur d'amenée où ils sont repris ensuite par d'autres moyens.

D'une manière générale, les produits arrivent au niveau du dispositif de prise en charge en étant bien répartis, de façon régulière, selon le pas des dents de la crémaillère. La mise au pas des produits peut être effectuée au moyen d'un cadenceur situé en amont du convoyeur d'amenée ou sur ce dernier.

Pour des produits de formes particulières, autres que des formes cylindriques, des flacons de section ovale, par exemple, l'orientation et la mise au pas précise de ces produits sont réalisées au moyen d'un cadenceur qui est constitué d'un couple de vis sans fin; ces vis sans fin interviennent en amont du dispositif de prise en charge d'un lot, entre la machine de préparation des produits, dont le débit est relativement aléatoire, et le dispositif de prise en charge qui va amener ledit lot à la tête de manipulation pour l'encaissage, par exemple.

Ce dispositif de prise en charge ne peut souffrir un quelconque désordre au niveau de la répartition des produits. Le lot de produits doit être parfaitement établi pour être pris en charge par le poussoir ou autre, avant d'être prélevé par la tête de manipulation qui réalise l'encaissage, par exemple.

Une installation similaire, dans laquelle le dispositif poussoir est un peigne agencé transversalement par rapport à l'axe longitudinal du convoyeur d'amenée des produits est décrite dans le document EP 1 052 200 A1. Ce document décrit une installation selon le préambule de la revendication 8.

Lorsque l'installation est du genre flexible, c'est-à-dire susceptible de traiter plusieurs types de produits, il faut prévoir un outillage pour chaque type de produit, aussi bien au niveau du dispositif de prise en charge qu'au niveau du cadenceur.

Les dispositifs de prise en charge du type poussoirs, ou autres, sont généralement constitués d'une simple lame ou bande réalisée en matériau thermoplastique sur laquelle sont taillées des dents de calage ou des alvéoles ; ils sont relativement simples à changer et peu coûteux.

En revanche, ce problème de changement est différent pour les cadenceurs à vis qui sont des outillages très onéreux, relativement lourds et assez compliqués à changer.

Compte tenu du poids de ces vis, leur changement est aussi une opération qui peut nécessiter du matériel de manutention et leur stockage requiert des aménagements du genre magasins, relativement encombrants.

De plus, ce genre d'installation qui comprend, d'une part, un cadenceur et, d'autre part un dispositif de prise en charge du lot, est particulièrement encombrant en longueur, et peut, dans certains cas, être inadapté du fait des contraintes liées à l'implantation, notamment lorsque la place est insuffisante dans des locaux existants.

L'invention propose un procédé de groupage de produits comme, par exemple, des produits du genre flacons ou autres à section ovale, lequel procédé permet de disposer d'une installation compacte, relativement simple et surtout dotée de grandes capacités en matière de polyvalence, de flexibilité.

Ce procédé et l'installation pour sa mise en oeuvre permettent aussi d'envisager l'utilisation d'un outillage d'une grande simplicité, facile à changer et surtout d'un coût extrêmement modeste, ce qui permet de réaliser des outillages bien adaptés à chaque type de produits, flacons ou autres.

De plus ce procédé permet de raccourcir la longueur du circuit suivi par les produits et donc de réduire les risques d'altération de ces derniers par frottements, notamment, sur des guides et autres.

L'installation se positionne directement en sortie de l'unité de préparation des produits, après la remplisseuse et/ou l'étiqueteuse, par exemple.

Elle peut aussi se présenter comme un véritable accessoire et n'être utilisée que pour des travaux spécifiques, pour certains types de produits, flacons ou autres ; le reste du temps elle peut être désactivée, shuntée.

Le procédé permet une grande souplesse d'utilisation ; les produits, flacons ou autres peuvent aussi être regroupés en un seul ou plusieurs lots selon les nécessités. L'invention permet notamment, pour les flacons de section ovale, de faire un regroupement de plusieurs lots avant leur mise en caisse, pour faciliter ladite mise en caisse qui peut se faire à l'aide d'un robot ou autre.

Le procédé de groupage selon l'invention permet de former chaque lot de produits à partir de produits, flacons ou autres qui arrivent espacés et en ligne, sur une file, transportés par un convoyeur d'amenée, lequel procédé consiste :
- à capter un certain nombre de produits sur ledit convoyeur d'amenée, au moyen d'un dispositif de collecte en forme de peigne, appelé collecteur, qui fait un angle compris entre 60 et 120° avec l'axe longitudinal d'avancement desdits produits,
- à déposer lesdits produits et à les larguer à un poste de prise en charge qui se situe sur le côté dudit convoyeur d'amenée,
- à animer ledit collecteur d'un mouvement en boucle qui se décompose en un mouvement transversal, parfois combiné avec un mouvement longitudinal de remontée de la file de produits, c'est-à-dire un mouvement inverse de celui dudit convoyeur d'amenée de ces produits,
- à déclencher la capture des produits en fonction d'informations qui prennent en compte : - la position desdits produits sur ledit convoyeur d'amenée par rapport audit collecteur et, - la vitesse dudit convoyeur d'amenée.

Toujours selon l'invention, le procédé de groupage de produits consiste : - à détecter l'arrivée d'un produit en amont du collecteur, - à l'attendre éventuellement et, à tout le moins, marquer un temps d'arrêt au moment où ledit produit détecté atteint sa position et se cale dans l'alvéole allouée dudit collecteur, puis - à amorcer la combinaison des mouvements transversal et longitudinal pour préparer la capture suivante.

Selon une autre disposition de l'invention, le procédé consiste à capter les produits les uns à la suite des autres en des points différents sur le convoyeur d'amenée, lesquels points sont décalés en remontant la ligne avec un même intervalle entre deux points consécutifs.

Toujours selon l'invention, le procédé consiste, lorsque le collecteur est complètement rempli, - à le décaler transversalement avec ses produits captés pour les amener au poste de dépose, contre un guide ou dans une structure d'accueil en forme de peigne également, par exemple, puis - à déplacer ledit collecteur, parallèlement et transversalement au convoyeur d'amenée des produits pour, dans un premier temps, doubler la file des produits à capter et, ensuite, ramener ledit collecteur au niveau du premier point de capture.

Selon une autre disposition de l'invention, le procédé consiste à déposer les produits captés, par le collecteur, d'un seul et même côté du convoyeur d'amenée, en amont du dernier point de capture desdits produits.

Selon une variante de réalisation de l'invention, le procédé consiste à déposer les produits captés par le collecteur, alternativement d'un côté puis de l'autre côté du convoyeur d'amenée.

Toujours selon l'invention, le procédé consiste à déposer plusieurs rangs de produits, de façon adjacente, avec un décalage transversal, avant d'effectuer leur regroupement et leur évacuation de façon globale, par des moyens appropriés du genre robot ou autre, en vue de leur mise en caisse, par exemple.

L'invention concerne également l'installation qui permet la mise en oeuvre du procédé détaillé auparavant, laquelle installation comprend :
- au moins une table faisant office de sole, disposée au niveau et à côté du convoyeur d'amenée des produits à capter, pour accueillir les produits qui ont été captés,
- un dispositif de collecte, ou collecteur, en forme de peigne, disposé transversalement par rapport au sens d'avancement des produits et faisant un angle par rapport à l'axe longitudinal d'avancement desdits produits compris entre 60 et 120°, mobile au-dessus de ladite sole,
- une structure appropriée pour déplacer longitudinalement et transversalement ledit collecteur par rapport audit convoyeur d'amenée,
- des moyens pour détecter la présence d'un produit à capter sur ledit convoyeur d'amenée, lesquels moyens sont disposés en amont dudit collecteur et se déplacent longitudinalement, simultanément à ce dernier.

L'invention concerne aussi le collecteur utilisé et en particulier un collecteur dont la forme de chaque alvéole correspond strictement à celle du produit à capter de façon à éviter les frottements et à limiter, dans le cas de cadences élevées, les risques de rebond du produit, lesquelles alvéoles s'étendent selon un axe qui fait un angle compris entre 60 et 120° par rapport à l'orientation de la ligne d'entrée desdites alvéoles.

Selon une autre disposition de l'invention, le collecteur comporte des alvéoles dont la profondeur longitudinale permet d'accueillir plusieurs produits qui se prêtent à regroupement longitudinal.

Toujours selon l'invention, l'installation peut comporter des moyens complémentaires qui apportent une aide au maintien des produits au niveau du poste de prise en charge, lesquels moyens sont constitués d'un guide ou d'une autre structure, en forme de peigne fixe.

Selon une autre disposition de l'invention, l'installation peut encore comporter des moyens complémentaires pour assurer une certaine stabilisation des produits captés pendant l'opération de capture, lesquels moyens peuvent être, par exemple, constitués de ventouses disposées dans le fond des alvéoles et mises en oeuvre pendant ladite opération.

Toujours selon l'invention, l'installation peut comporter au moins un robot de prise en charge des produits, flacons ou autres, qui sont regroupés sur la table d'accueil, qu'ils soient disposés en une ou plusieurs lignes, lequel robot étant aménagé avec une tête pour prélever une ou plusieurs lignes de produits, flacons ou autres, et pour mettre ces derniers en caisse, disposés en épis ou autre.

Selon une autre disposition de l'invention, la table d'accueil des produits, flacons ou autres, est constituée d'un plan fixe, relativement lisse, sur lequel les produits captés prennent place au fur et à mesure de leur déplacement latéral par le collecteur.

Toujours selon l'invention, la table d'accueil des produits captés s'étend de part et d'autre du convoyeur d'amenée pour permettre un largage desdits produits captés des deux côtés dudit convoyeur d'amenée.

Selon une autre disposition de l'invention, la table d'accueil des produits, flacons ou autres, est constituée d'un convoyeur à tapis sans fin qui est piloté pour accompagner le collecteur dans son mouvement et prendre en charge lesdits produits pour assurer une sorte de tampon entre ledit collecteur et le robot d'encaissage des produits regroupés.

Toujours selon l'invention, pour le cas d'un encaissage des produits dans une caisse du type « wrap around », l'installation peut comporter un dispositif poussoir transversal qui transfère le lot de produits sur le système d'encaissage disposé en bordure de la table, qu'il s'agisse de la table en forme de plan fixe ou de la table en forme de convoyeur à tapis sans fin.

Mais l'invention sera encore détaillée à l'aide de la description suivante et des dessins annexés, donnés à titre indicatif, et dans lesquels :
- la figure 1 est une présentation schématique en perspective de l'installation selon l'invention, associée à un convoyeur d'amenée des produits ;
- la figure 2 est un chronogramme avec le temps T en abscisse et les vitesses aller VA et retour VR en ordonnée, lequel chronogramme illustre un cycle de captage des produits avec les courbes des vitesses de déplacement du collecteur: une courbe en traits forts pour la vitesse transversale VT et, une courbe en pointillés pour la vitesse longitudinale VL ;
- les figures 3 à 8 illustrent quelques étapes du procédé de captage des produits ;
- les figures 9 et 10 illustrent une variante de l'installation qui est équipée de deux zones de largage des produits captés ;
- la figure 11 illustre un procédé de regroupage de produits, du genre flacons à section ovale, au moyen d'un collecteur en forme de peigne qui permet de larguer lesdits flacons selon une disposition en épis ;
- la figure 12 représente, schématiquement, une installation complète de regroupement et de mise en caisse de flacons disposés en épis dans ladite caisse.
- la figure 13 représente une variante de réalisation de l'installation et en particulier de la table de prise en charge des lots de produits, laquelle table est en forme de convoyeur à tapis sans fin, associée à un robot d'encaissage ;
- la figure 14 représente une autre variante de l'installation, pour le cas d'un encaissage des produits dans des caisses du type « wrap ».

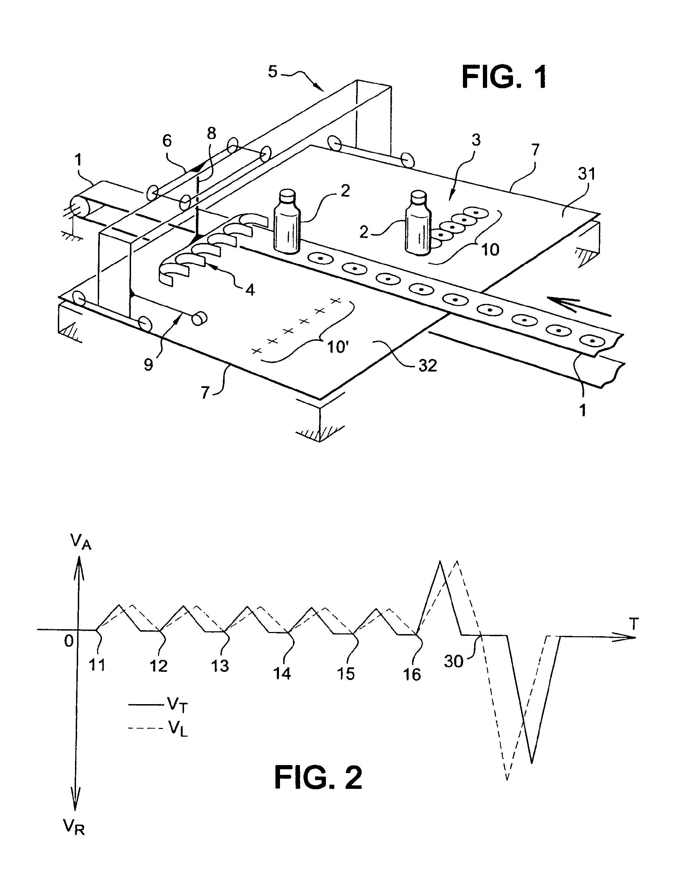

Telle que représentée figure 1, l'installation comprend un convoyeur 1 d'amenée des produits 2 qui proviennent, par exemple, d'un machine de préparation, non représentée, comme une remplisseuse et/ou étiqueteuse.

Les produits arrivent en ligne, sur une file ; ils passent le long d'une table 3 qui fait office de sole ; cette table 3 peut comporter un plan fixe constitué d'un panneau qui s'étend le long du convoyeur 1, exactement au même niveau; elle peut aussi, comme représentée figure 1 et expliquée plus loin, être constituée de deux panneaux 31 et 32 qui s'étendent de part et d'autre du convoyeur 1, formant une continuité de surface ; chaque panneau 31, 32 étant au même niveau que la surface supérieure de ce convoyeur 1.

Le convoyeur 1 d'amenée est déchargé de ses produits 2 au moyen d'un dispositif de collecte appelé collecteur dans le texte, lequel collecteur 4, en forme de peigne, capte les produits 2 les uns après les autres au fur et mesure de l'avance dudit convoyeur 1 ; il est disposé transversalement par rapport au sens d'avancement desdits produits 2 et il se décale transversalement, après chaque capture, d'une distance qui est de l'ordre de la largeur desdits produits 2.

Pour pouvoir décharger les produits captés et recommencer un cycle, le collecteur 4, comme détaillé plus loin, est également mobile longitudinalement. Il remonte la file des produits dans le sens contraire de l'avancement du convoyeur 1 d'amenée pendant l'opération de captage et, ensuite, après dépose et largage des produits captés, ledit collecteur remonte de nouveau la file de produits, mais dans le sens d'avancement dudit convoyeur cette fois, et à grande vitesse, pour doubler ladite file et se repositionner rapidement devant le premier produit à capter.

Pour effectuer ces différents mouvements, le collecteur 4 est mobile, porté et guidé par une structure qui comprend : - une sorte de portique 5 capable de se déplacer longitudinalement au-dessus de la table 3, parallèlement au sens de déplacement des produits 2 disposés sur le convoyeur 1, et, - un chariot 6 qui se déplace sur ledit portique 5, toujours au-dessus de ladite table 3, transversalement par rapport au sens de déplacement desdits produits 2, lequel collecteur 4 est suspendu audit chariot 6.

Le portique 5 est guidé sur des rails 7 disposés sur la table 3 et en particulier sur les bordures latérales de chaque panneau 31, 32, et il est mobile sous l'effet d'un organe moteur, non représenté, du type servoréducteur ou moteur électrique linéaire.

Le chariot 6 est guidé sur des poutres disposées à la partie supérieure du portique 5 et il est également mobile, lui aussi, sous l'effet d'un organe moteur, non représenté, du type servoréducteur ou moteur électrique linéaire.

Le collecteur 4 est solidaire du chariot 6 par l'intermédiaire d'un support en forme de bras 8 ; il est maintenu à une hauteur appropriée par rapport aux produits 2 à capter.

La liaison entre le bras 8 et le collecteur 4 est aménagée pour faciliter les opérations de changement de modèles ; ce collecteur constitue en effet un outillage qui est adapté à la forme des produits 2 à capter. Il est constitué d'une simple plaque en matériau thermoplastique.

Un système 9 de détection, installé sur le portique 5, permet de lancer le cycle de captage des produits 2. En effet, l'information concernant la détection du passage d'un produit permet, en fonction de la vitesse d'avancement du convoyeur 1 d'amenée, de déterminer au moyen d'un calculateur approprié, le moment de son intégration dans l'alvéole allouée du collecteur 4.

A partir de cette intégration, le collecteur 4 peut amorcer son mouvement de décalage et positionner l'alvéole adjacente libre sur l'axe de la file des produits disposés sur le convoyeur 1 d'amenée, pour que cette alvéole soit prête à accueillir le produit suivant.

Lorsque le nombre prévu de produits 2 à capter est atteint, lesdits produits captés sont acheminés et largués au poste 10 de prise en charge qui se situe sur la table 3, dans sa partie amont.

Selon le type de produits, le bras 8 peut comporter plusieurs collecteurs superposés, deux par exemple, pour des produits dont la hauteur est telle qu'ils risquent, compte tenu de leur instabilité, de provoquer des incidents lors de leur prise en charge par un collecteur 4 unique.

Les produits 2 arrivent en file sur le convoyeur d'amenée. Ils sont de préférence espacés, soit naturellement en sortie de la machine de préparation, soit de façon forcée par des moyens appropriés, non représentés.

La figure 2 représente, sous la forme d'un chronogramme, les vitesses aller VA et retour VR de déplacement transversal du collecteur 4, en fonction du temps T.

Le chronogramme représente un cycle complet de capture de six produits 2 avec dépose au poste 10 de prise en charge et retour au niveau du premier point de capture.

Ces différents points de capture apparaissent sur le chronogramme de la figure 2 ainsi que sur les figures suivantes.

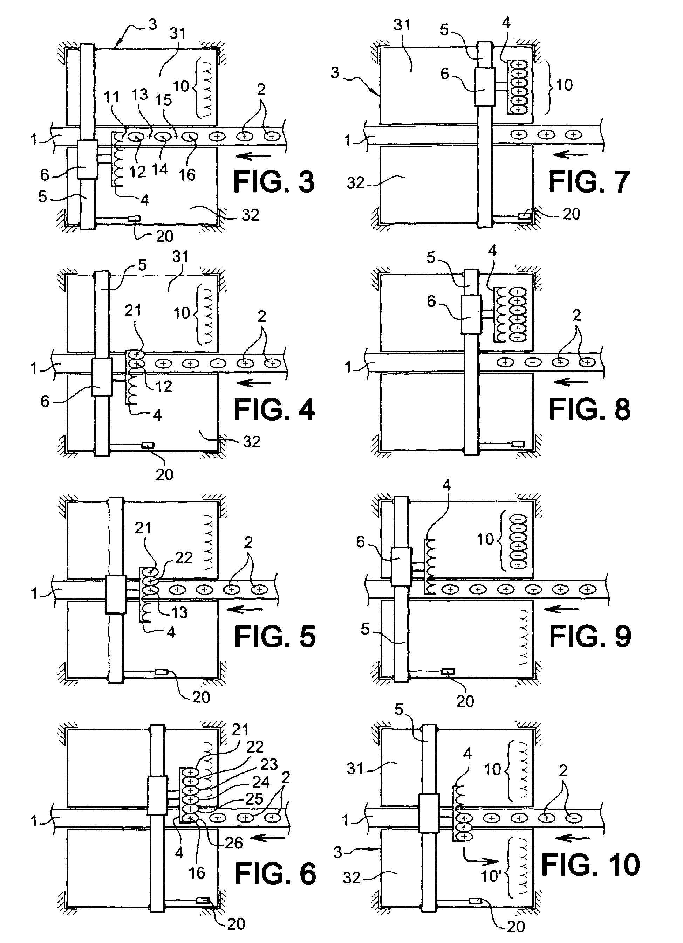

Le premier point repéré 11 sur le chronogramme correspond au moment où, comme représenté figure 3, le collecteur 4 accueille le premier produit 2, 21 qui arrive avec le convoyeur 1.

Avant ce point 11, le collecteur 4 est en position d'attente, immobile, se tenant prêt à accueillir le premier produit 2, 21.

Ce premier produit 21 est détecté par le système 9 approprié constitué d'une cellule 20 qui apparaît sur cette figure 3 et sur les figures suivantes. Cette cellule 20 est embarquée longitudinalement avec le collecteur 4 ; elle le précède.

Dès que le premier produit 21 est positionné dans son alvéole du collecteur 4, et grâce à l'information donnée par la cellule 20, ledit collecteur 4 se déplace, comme indiqué sur le chronogramme, avec un mouvement particulier qui comporte tout d'abord une combinaison de mouvements qui comprend une composante transversale et une composante longitudinale, puis, le mouvement transversal s'arrête alors que le mouvement longitudinal continue et ceci jusqu'au moment de l'impact.

La durée du mouvement transversal est donc légèrement plus courte que celle du mouvement longitudinal.

Cette combinaison des mouvements n'est pas permanente; elle n'est que temporaire et elle permet de laisser du temps au collecteur 4 pour se stabiliser dans le sens transversal, avant la capture du produit 2 qui se présente à lui.

Le mouvement transversal du collecteur 4 est stoppé dès que la deuxième alvéole se cale sur l'axe de la ligne des produits 2 et ledit collecteur 4 attend l'impact du deuxième produit 22 à capter. Ce nouvel impact a lieu à un second point 12 qui est fixe également, lequel second point 12, figure 4, se situe en amont du premier point 11 de captage, sur le convoyeur 1 d'amenée.

La distance entre les deux points de captage est fonction de plusieurs paramètres comme, par exemple, les capacités d'accélération maximale et de vitesse maximale du collecteur 4 combinées avec les particularités des produits en matière de stabilité, de formes et de dimensions.

Dans le mode de réalisation représenté sur les figures, cette distance est de l'ordre de la moitié du pas qui existe entre deux produits 2 consécutifs disposés sur le convoyeur 1.

Au moment de l'impact du produit 2, 21 avec le collecteur 4, la vitesse du produit capté correspond à la vitesse du convoyeur 1 d'amenée et, à cet instant précis, ledit collecteur 4 est immobile.

Le captage des autres produits 23 à 26 s'effectue donc pas à pas, comme précédemment avec, à chaque fois, un nouveau point fixe de captage qui est distant du point précédent.

Comme représenté figure 5 ainsi que sur le chronogramme de la figure 2, le point de captage suivant est le point 13 puis ensuite les points 14, 15 représentés également sur ledit chronogramme et, enfin, le point 16, figure 6, où le collecteur 4 accueille le dernier produit 26 du lot.

Le collecteur 4 se déporte ensuite rapidement et totalement sur le côté du convoyeur 1, comme représenté figure 7 et sur le chronogramme, pour déposer et larguer son lot de produits au poste 10 de prise en charge ; laquelle dépose est repérée 30 sur ledit chronogramme.

Ce poste 10 de prise en charge peut comporter, comme représentée sur les figures, une structure complémentaire pour accueillir le lot de produits 21 à 26, laquelle structure, en forme de guide ou, comme représentée sur la figure, en forme de peigne, permet de stabiliser lesdits produits et de les maintenir le temps qu'ils soient pris en charge par une tête de manipulation, par exemple, comme représentée plus loin.

Dès que le lot de produits 21 à 26 est au poste 10 de prise en charge, sur le panneau 31 de la table 3, le collecteur 4 est animé d'un mouvement de recul, figure 8 ; ce mouvement s'effectue parallèlement à la file des produits 2 disposés sur le convoyeur 1 d'amenée, à une vitesse plus importante que celle dudit convoyeur 1, pour doubler ladite file et permettre au collecteur 4 de se repositionner par un mouvement de translation, au premier point 11 de captage, comme représenté figure 3, avant de recommencer un cycle de captage.

Ce mouvement cyclique, en boucle, a une durée qui est déterminée par la vitesse de défilement des produits 2 qui sont amenés par le convoyeur 1, mais surtout par le temps mis par chaque produit pour atteindre son point de captage et ce temps peut varier selon l'espacement entre lesdits produits.

Dès que l'opération de capture proprement dite est terminée, la cellule 20 est mise en stand-by; elle est notamment inactive pendant le mouvement de recul du collecteur 4.

La figure 9 représente une variante de réalisation de l'installation.

Cette installation comporte une table 3, comme indiqué précédemment, qui présente une symétrie totale par rapport au convoyeur 1 d'amenée. Cette symétrie permet de disposer de deux postes 10 et 10' de prise en charge sur la table 3:
- le poste 10 situé sur le panneau 31, en rive droite dudit convoyeur 1 et,
- le poste 10' situé sur le panneau 32, en rive gauche dudit convoyeur 1.

Chaque lot de produits 2 captés est déposé et largué alternativement sur les côtés du convoyeur 1, en rive, par le même collecteur 4.

Cette disposition confère un mouvement au collecteur 4 dont l'enveloppe est une boucle qui a un contour en forme d'ailes de papillon déployées. Ce mouvement du collecteur 4 avec des allers et venues entre les deux postes 10, 10', permet de limiter les temps morts.

La figure 9 montre le collecteur 4 en position d'attente au premier point 11 de captage, après son retour du poste 10 de dépose. La capture s'effectue, comme décrit précédemment, mais le collecteur 4 progresse vers le second poste 10' de prise en charge.

Pendant ce cycle de capture et de dépose sur la rive gauche du convoyeur 1, le lot de produits déposés au poste 10 de la rive droite dudit convoyeur a été évacué, libérant la place pour l'arrivée d'un nouveau lot de produits 2.

Le collecteur 4 peut aussi comporter des alvéoles dont la profondeur longitudinale leur permet d'accueillir plusieurs produits 2 et en particulier des produits dont la forme se prête à ce type de regroupement longitudinal.

Pendant le chargement du collecteur 4, des moyens appropriés peuvent retenir les produits captés dans les alvéoles. Ces moyens sont embarqués longitudinalement avec le collecteur 4. Ils peuvent être constitués de ventouses disposées dans le fond des alvéoles du collecteur 4 et qui sont mises en oeuvre pendant l'opération de captage ou de moyens du genre guide, lequel guide étant escamotable lorsque le collecteur se présente au poste 10, ou 10', de prise en charge.

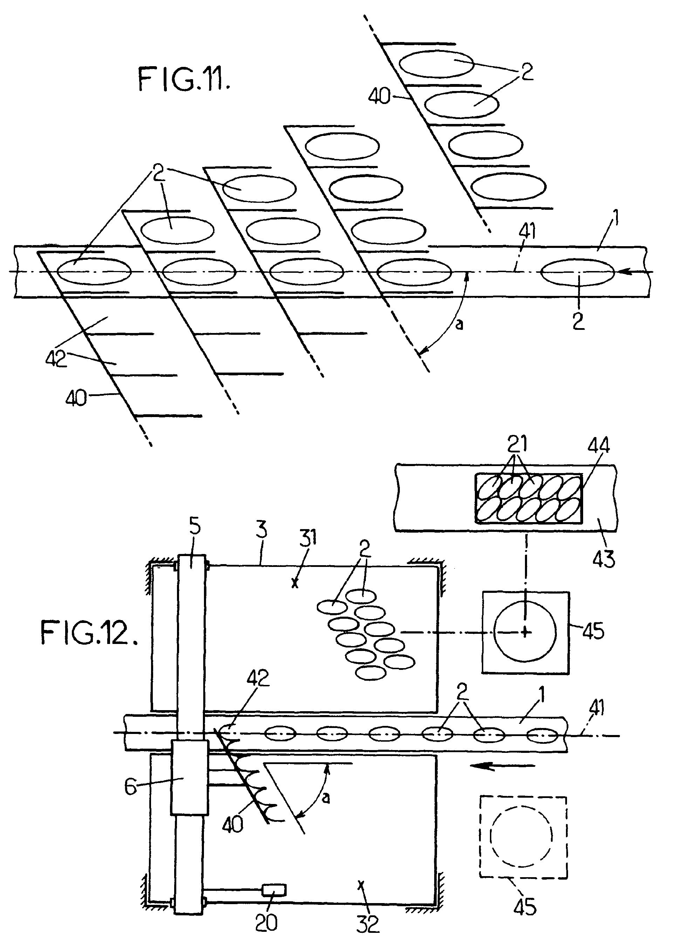

La Figure 11 représente un autre modèle de collecteur 4, repéré 40, qui permet, avec des produits du genre flacons dont la section est ovale, d'effectuer un regroupement de ces flacons 2 en épis.

Comme précédemment, les flacons 2 arrivent en ligne, espacés entre eux sur une file, et ils sont transportés par le convoyeur 1 d'amenée.

Ces flacons 2 sont captés à la volée, sur l'axe 41 longitudinal du convoyeur 1 d'amenée, au moyen du collecteur 40 qui remonte la file de flacons.

Ce collecteur 40 est disposé transversalement mais il fait un angle avec l'axe 41 du convoyeur d'amenée. Cet angle a est, par exemple, compris entre 60 et 120° pour mettre les flacons 2 en ligne, avec un arrangement en forme d'épis, c'est-à-dire une disposition qui se prête bien au rangement et au calage de ce type de flacons 2 dont la section est ovale.

Le collecteur 40 est muni de plusieurs alvéoles 42 qui sont orientées parallèlement à l'axe 41 du convoyeur 1 d'amenée ; ces alvéoles 42 s'étendent selon un axe qui fait un angle compris entre 60 et 120° par rapport à l'orientation de la ligne de leur entrée, c'est-à-dire par rapport au front du collecteur. La forme des alvéoles 42 correspond à celle des flacons 2 à capter afin de limiter et d'éviter les risques de rebonds.

Lorsque le collecteur 40 est plein, il se dégage transversalement pour abandonner le lot constitué de plusieurs flacons 2 positionnés en épis, avant de retourner à sa position de départ, en remontant la file de flacons qui, elle, continue à avancer sur le convoyeur 1 d'amenée. Le déplacement du collecteur 40 est identique à celui du collecteur 4 détaillé auparavant en liaison avec les figures 1 à 10.

Le collecteur 40 peut déposer plusieurs lots de flacons qui se trouvent, comme représenté figure 12, disposés selon deux lignes adjacentes, par exemple.

Cette figure 12 montre, schématiquement, une installation qui est équipée d'un collecteur 40 faisant un angle a avec l'axe du convoyeur 1 d'amenée, un angle compris entre 60 et 120°, par exemple.

Ce collecteur 40 capte les flacons 2, à la volée, pour les déposer sous forme de lots en épis et en lignes sur la table 3, qui fait office de simple table de transit. L'installation peut en effet être associée à un poste complémentaire où s'effectue la nùse en caisse des flacons 2.

Ce poste complémentaire comprend un convoyeur 43 sur lequel circulent des caisses 44 et ces caisses sont, par exemple, remplies avec les flacons 2 au moyen d'un robot 45. Ce robot 45 peut comporter une tête, non représentée, aménagée pour saisir un ou plusieurs lots de flacons 2 et les introduire dans la caisse 44.

Sur cette figure 12, on remarque aussi que les flacons 2 peuvent être conditionnés dans la caisse 44 en étant disposés en épis ; cette disposition en épis permet de mettre un maximum de flacons 2 dans un volume réduit.

Comme précédemment, le collecteur 40 peut déposer des flacons 2 sur l'une ou l'autre des tables 31 et 32 qui sont disposées de part et d'autre du convoyeur 1 d'amenée desdits flacons 2. Dans ce cas, en fonction des cadences, l'installation peut alimenter plusieurs robots, disposés symétriquement par rapport au convoyeur 1 d'amenée.

Le collecteur 40 est porté et guidé, comme précédemment, au moyen d'une structure en forme de portique 5 qui se déplace longitudinalement au dessus de la table 3, lequel portique 5 sert de guide à un chariot 6 qui se déplace transversalement et ce chariot porte ledit collecteur 40.

On remarque, sur les figures, que les flacons 2 sont régulièrement espacés sur le convoyeur 1 d'amenée. L'espacement des flacons peut, par exemple, être effectué au moyen d'une simple roue d'espacement ou autre, non représentée.

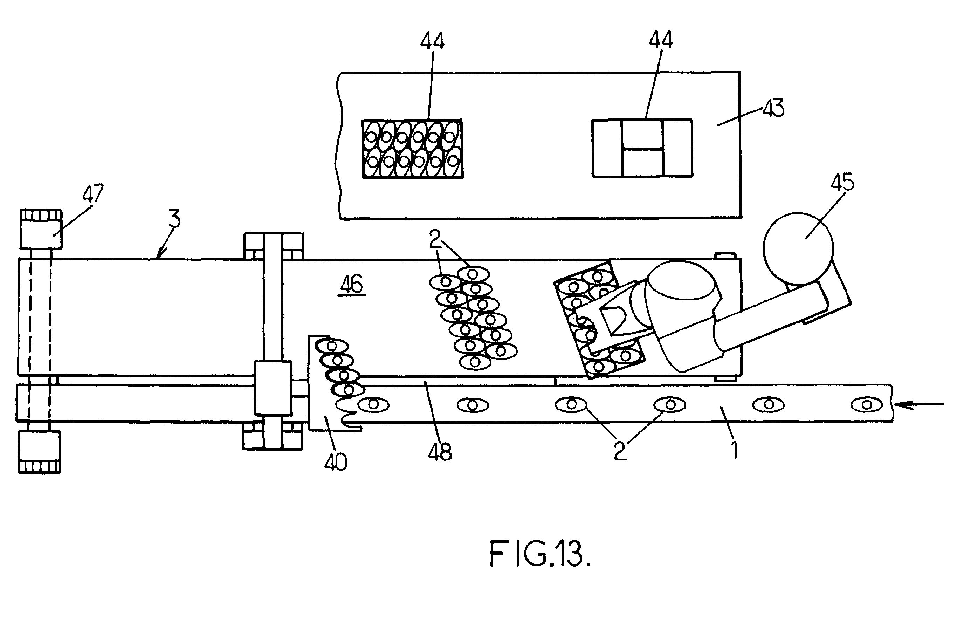

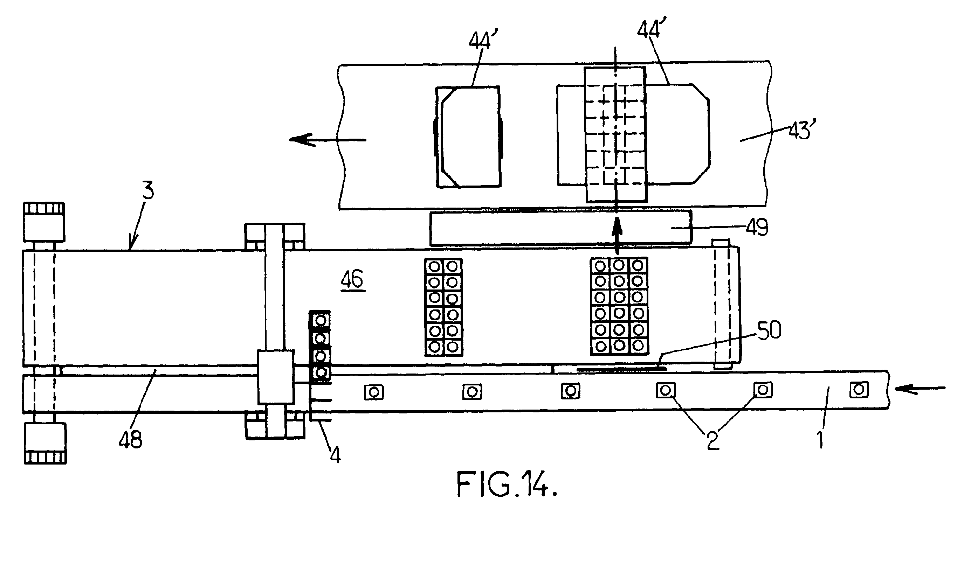

Les figures 13 et 14 représentent deux modes de réalisation de la table 3 de prise en charge des lots de produits 2 ; la figure 13 montre une table 3 où les lots sont formés par le collecteur 40 et la figure 14 montre une table où les lots sont formés par le collecteur 4, qui fait un angle de 90° par rapport à l'axe longitudinal 41 du convoyeur 1 d'amenée des produits 2.

Dans les deux cas, la table 3 de prise en charge est constituée d'un convoyeur 46 du type à tapis sans fin, lequel tapis est motorisé par un servomoteur 47 sous la commande d'un automate qui gère les déplacements des différents organes mobiles de l'installation dont le collecteur 4, le collecteur 40 et ledit convoyeur 46.

Ce convoyeur 46 se déplace dans un sens qui est inversé par rapport à celui du convoyeur 1 d'amenée. Son déplacement est synchronisé avec celui du collecteur 4, ou 40, pour accueillir les produits 2 qui sont déplacés par ledit collecteur 4, ou 40, et pour faire office de tampon et de convoyeur accumulateur.

Cette accumulation des lots de produits 2, sur le convoyeur 46, permet au robot 45 de disposer d'une plage de temps plus large et surtout une plage de temps plus facile à gérer pour effectuer l'opération d'encaissage des lots de produits 2 dans les caisses 44 qui circulent sur le convoyeur 43.

Le convoyeur 1 d'amenée des produits 2 est séparé du convoyeur 46 de prise en charge des lots par une sole 48 fixe qui fait la jonction et assure une continuité de surface entre les deux.

Cette sole 48 a une longueur qui correspond au moins à la course longitudinale du collecteur 4, 40.

La figure 14 représente une variante de réalisation dans laquelle les lots de produits 2 sont placés dans des caisses du type « WRAP. »

On retrouve les lots de produits 2, accumulés sur le convoyeur 46, prêts à être introduits dans une caisse 44' du type « WRAP » qui se situe sur une installation d'encaissage comportant un convoyeur 43' qui est parallèle au convoyeur 46. Entre le convoyeur 46 de prise en charge et le convoyeur 43' d'encaissage, on trouve une sole 49 fixe qui réalise une continuité de surface pour permettre le déplacement et l'introduction du lot de produits 2 dans la caisse 44'. Les lots de produits 2 sont transférés au moyen d'un poussoir 50 qui apparaît, sur la figure, entre le convoyeur 1 d'amenée et le convoyeur 46 de prise en charge, lequel poussoir 50 est animé d'un mouvement transversal, perpendiculaire au sens d'amenée des produits 2 sur le convoyeur 1.

Ce poussoir 50 est porté et guidé au moyen d'une structure, non représentée, du genre portique.

## Revendications

1. - Procédé de groupage de produits du genre flacons ou autres à section ovale, par exemple, pour former un lot en vue d'une prise en charge par des moyens appropriés, lesquels produits arrivent en ligne, sur une file, transportés par un convoyeur (1) d'amenée, lequel procédé consiste :
- à capter un certain nombre de produits (2) sur ledit convoyeur d'amenée, au moyen d'un dispositif collecteur (40) en forme de peigne disposé transversalement et qui fait un angle a compris entre 60 et 120° par rapport à l'axe longitudinal dudit convoyeur d'amenée desdits produits (2),
- à les déposer et les larguer à un poste (10) de prise en charge qui se situe sur le côté dudit convoyeur (1) d'amenée,
- à animer ledit collecteur (40) d'un mouvement en boucle qui se décompose en un mouvement transversal parfois combiné avec un mouvement longitudinal de remontée de la file des produits,
- à déclencher le cycle de capture desdits produits (2) en fonction d'informations qui prennent en compte - la position desdits produits (2) sur ledit convoyeur (1) d'amenée par rapport audit collecteur (40) et - la vitesse dudit convoyeur (1).

2. - Procédé de groupage de produits selon la revendication 1, **caractérisé en ce qu'**il consiste, pour le collecteur (40), après avoir détecté l'arrivée d'un produit (2) à capter : - à marquer un temps d'arrêt au moment où le premier produit (2) atteint sa position et se cale dans l'alvéole allouée dudit collecteur (40), puis - à amorcer la combinaison des mouvements transversal et longitudinal pour préparer la capture suivante,
- à stopper le mouvement transversal dudit collecteur (40) et son mouvement longitudinal au moment de l'impact.

3. - Procédé de groupage de produits selon la revendication 2, **caractérisé en ce qu'**il consiste à capter les produits (2) les uns à la suite des autres en des points différents sur le convoyeur (1) d'amenée, lesquels points sont décalés en remontant la ligne desdits produits avec un même intervalle entre deux points consécutifs.

4. - Procédé de groupage de produits selon la revendication 3, **caractérisé en ce qu'**il consiste, lorsque le collecteur (40) est complètement rempli, - à décaler transversalement ledit collecteur (40) avec ses produits (2) captés pour amener ces derniers au poste (10) de dépose, contre un guide ou dans une structure d'accueil en forme de peigne également, puis - à déplacer ledit collecteur (40), parallèlement au convoyeur (1) d'amenée desdits produits (2), dans un premier temps pour doubler la file et le premier produit à capter et, ensuite, dans un deuxième temps, longitudinalement et transversalement pour ramener ledit collecteur (40) au niveau du premier point de capture.

5. - Procédé de groupage de produits selon la revendication 4, **caractérisé en ce qu'**il consiste à déposer les produits (2) captés par le collecteur (40), d'un seul et même côté du convoyeur (1) d'amenée, en amont du niveau du dernier point de capture desdits produits (2).

6. - Procédé de groupage de produits selon la revendication 4, **caractérisé en ce qu'**il consiste à déposer les produits (2) captés par le collecteur (40), alternativement sur la rive droite et sur la rive gauche du convoyeur (1) d'amenée.

7. - Procédé de groupage de produits selon la revendication 1, **caractérisé en ce qu'**il consiste à déposer plusieurs rangs de produits (2), de façon adjacente, avec un décalage transversal, avant d'effectuer leur regroupement et leur évacuation de façon globale, par des moyens appropriés du genre robot (45) ou autre, en vue de leur mise en caisse, par exemple.

8. - Installation pour la mise en oeuvre du procédé de groupage de produits du genre flacons ou autres, comprenant :
- au moins une table (3) faisant office de sole, disposée au niveau et à côté du convoyeur (1) d'amenée des produits (2) à capter, pour accueillir lesdits produits captés,
- un collecteur (40) en forme de peigne, disposé transversalement par rapport au sens d'avancement desdits produits (2), mobile au-dessus de ladite table (3),
- une structure appropriée pour porter et déplacer longitudinalement et transversalement ledit collecteur (40) par rapport et au-dessus dudit convoyeur (1) d'amenée et de la table (3), charactérisée en ce que le collecteur fait un angle a compris entre 60 et 120° par rapport à l'axe longitudinal dudit convoyeur d'amenée desdits produits (2), et en ce que l'installation comprend des moyens pour détecter la présence d'un produit (2) à capter sur ledit convoyeur (1) d'amenée, lesquels moyens sont disposés en amont dudit collecteur (40) et ils se déplacent longitudinalement avec ce dernier.

9. - Installation selon la revendication 8, **caractérisée en ce que** la table (3) d'accueil des produits (21 à 26) captés est constituée de deux panneaux (31, 32) qui s'étendent de part et d'autre du convoyeur (1) d'amenée pour permettre un largage desdits produits (21 à 26) captés des deux côtés dudit convoyeur (1).

10. - Installation selon la revendication 8, **caractérisée en ce que** le collecteur comporte des alvéoles (42) dont la forme correspond strictement à celle des produits (2) à capter de façon à limiter, dans le cas de cadences élevées, les risques de rebond du produit capté sur ledit collecteur lorsque ledit produit se met en place dans son alvéole, lesquelles alvéoles s'étendent selon un axe qui fait un angle compris entre 60 et 120° par rapport à l'orientation de la ligne d'entrée desdites alvéoles.

11. - Installation selon la revendication 10, **caractérisée en ce que** le collecteur comporte des alvéoles dont la profondeur longitudinale permet d'accueillir plusieurs produits (2) qui se prêtent à un regroupement longitudinal.

12. - Installation selon la revendication 8, **caractérisée en ce qu'**elle comporte au moins un robot (45) de prise en charge des produits (2), flacons ou autres disposés en épis, lequel robot comporte une tête aménagée pour prélever plusieurs lignes de produits (2), flacons ou autres, et pour les mettre en caisse sur un convoyeur (43) approprié disposé à proximité de la table (3) d'accueil.

13. - Installation selon la revendication 8, **caractérisée en ce qu'**elle comporte une table (3) d'accueil des produits (2), flacons ou autres, qui est constituée d'un convoyeur (46) à tapis sans fin, lequel convoyeur (46) est piloté pour accompagner le collecteur dans son mouvement et prendre en charge lesdits produits (2) pour assurer une sorte d'accumulation.

14. - Installation selon la revendication 13, **caractérisée en ce que**, pour le cas d'un encaissage des lots de produits (2) dans une caisse (44') du type « wrap around », ladite installation comporte un dispositif du genre poussoir (50) qui est disposé transversalement, lequel poussoir (50) transfère le lot de produits (2) sur le système convoyeur (43') d'encaissage.

## Claims

1. Method for grouping products of the vial or same with oval section type, for example, in order to form a batch so that it can be taken up by appropriate means, products arriving in line, in a queue, transported by a supply conveyor (1), method consisting in:
- collecting a certain number of products (2) on said supply conveyor, by means of a device for collecting (40) in the form of a comb arranged transversally and which forms an angle a between 60 and 120° in relation to the longitudinal axis of said supply conveyor of said products (2) ,
- depositing said products and in dropping them at a take-up station (10) which is located on the side of said supply conveyor (1),
- enabling said collector (40) with a loop movement that can be divided into a transversal movement, sometimes combined with a longitudinal movement upwards of the product queue,
- triggering the collecting of products (2) according to the information that takes into account - the position of said products (2) on said supply conveyor (1) in relation to said collector (40) and - the speed of said conveyor (1).

2. Method for grouping products according to claim 1, **characterised in that** it consists, for the collector (40), after having detected the arrival of a product (2) to be collected: - in observing a pause at the moment when the first product (2) reaches its position and is wedged in the allocated cell of said collector (40), then - in starting the combination of the transversal and longitudinal movements in order to prepare the following collection, - in stopping the transversal movement of said collector (40) and its longitudinal movement at the time of the impact.

3. Method for grouping products according to claim 2, **characterised in that** it consists in collecting the products (2) one after the other in different points on the supply conveyor (1), points which are shifted moving back up the line of said products with the same interval between two consecutive points.

4. Method for grouping products according to claim 3, **characterised in that** it consists, when the collector (40) is entirely filled, - in shifting transversally said collector (40) with its products (2) collected in order to supply the latter to the depositing station (10), against a guide or in a structure for receiving in the form of a comb also, then - in displacing said collector (40), in parallel to the supply conveyor (1) of said products (2), in a first step in order to pass up the queue and the first product to be collected and, then, in a second step, longitudinally and transversally in order to return said collector (40) to the first point of collecting.

5. Method for grouping products according to claim 4, **characterised in that** it consists in depositing the products (2) collected by the collector (40), on a single and same side of the supply conveyor (1), upstream of the last point of collection of said products (2).

6. Method for grouping products according to claim 4, **characterised in that** it consists in depositing the products (2) collected by the collector (40), alternatively on the right edge and on the left edge of the supply conveyor (1).

7. Method for grouping products according to claim 1, **characterised in that** it consists in depositing several rows of products (2), adjacently, with a transversal shift, before carrying out their grouping and their removal globally, by appropriate means of the robot type (45) or other, in order to box them, for example.

8. Installation for the implementation of the method for grouping products of the vial type or other, comprising:
- at least one table (3) acting as a slider bed, arranged on and next to the supply conveyor (1) of the products (2) to be collected, in order to receive said collected products,
- a collector (40) in the form of a comb, arranged transversally in relation to the advancement direction of said products (2), mobile above said table (3),
- an appropriate structure for carrying and displacing longitudinally and transversally said collector (40) in relation to and above said supply conveyor (1) and the table (3), **characterised in that** the collector (40) makes an angle a between 60 and 120° in relation to the longitudinal axis of the supply conveyor of said products (2), and **in that** the installation comprises means for detecting the presence of a product (2) to be collected on said supply conveyor (1), means which are arranged upstream of said collector (40) and they are displaced longitudinally with the latter.

9. Installation according to claim 8, **characterised in that** the table (3) for receiving the products (21 to 26) collected is comprised of two panels (31, 32) which extend on either side of the supply conveyor (1) in order to allow for a dropping of said products (21 to 26) collected on the two sides of said conveyor (1).

10. Installation according to claim 8, **characterised in that** the collector comprises cells (42) of which the form corresponds strictly to that of the products (2) to be collected in such a way as to limit, in the case of high rates, the risks of bouncing of the product collected on said collector when said product is set into place in its cell, cells extending according to an axis which forms an angle between 60 and 120° in relation to the orientation of the entry line of said cells.

11. Installation according to claim 10, **characterised in that** the collector comprises cells of which the longitudinal depth makes it possible to receive several products (2) which are intended for a longitudinal grouping.

12. Installation according to claim 8, **characterised in that** it comprises at least one robot (45) for taking up products (2), vials or other arranged at an angle, robot comprising a head arranged to pick up several lines of products (2), vials or other, and to box them on an appropriate conveyor (43) arranged in the vicinity of the receiving table (3).

13. Installation according to claim 8, **characterised in that** it comprises a table (3) for receiving products (2), vials or other, which is comprised of an endless belt conveyor (46), conveyor (46) being driven in order to accompany the collector in its movement and to take up said products (2) in order to provide a sort of accumulation.

14. Installation according to claim 13, **characterised in that**, for the case of a case packing of the batches of products (2) in a box (44') of the "wrap around" type, said installation comprises a device of the pusher (50) type which is arranged transversally, pusher (50) transferring the batch of products (2) on the case packing conveyor system (43').

## Patentansprüche

1. - Verfahren zum Gruppieren von Flaschen oder anderen Produkten mit ovalförmigem Querschnitt, beispielsweise, um ein Los mit dem Ziel zu bilden, dieses mit geeigneten Mitteln zu übernehmen, wobei die Produkte mit einer zuführenden Fördereinrichtung transportiert in einer Reihe aufgereiht ankommen, das Verfahren bestehend aus:
- dem Aufnehmen einer bestimmten Anzahl von Produkten (2) auf der zuführenden Fördereinrichtung mittels einer querliegend angeordneten kammförmigen Sammelvorrichtung (40), die einen Winkel a zwischen 60 und 120 in Bezug zur Längsachse der die Produkte (2) zuführenden Fördereinrichtung bildet,
- ihrem Abstellen und ihrer Entnahme an einer Stelle (10) zur Übernahme, die an der Seite der zuführenden Fördereinrichtung (1) angeordnet ist,
- dem Bewegen des Sammlers (40) in einer schleifenförmigen Bewegung, die sich in eine Bewegung in Querrichtung, teilweise kombiniert mit einer Bewegung in Längsrichtung zum Herauffahren entlang der Reihe der Produkte, aufspaltet,
- dem Einleiten der Aufnahme der Produkte (2) in Abhängigkeit von Informationen, die - die Position der Produkte (2) auf der zuführenden Fördereinrichtung (1) in Bezug zu dem Sammler (40) und
- die Geschwindigkeit der Fördereinrichtung (1) berücksichtigen.

2. - Verfahren zum Gruppieren von Produkten gemäß Anspruch 1, **dadurch gekennzeichnet, dass** es nach dem Registrieren der Ankunft eines Produkts (2) für den Sammler (40) besteht aus: - dem Markieren einer Wartezeit in dem Moment, in dem das erste Produkt (2) seine Position erreicht und in einer Zelle des Sammlers (40) aufgerommen wird, danach - dem Einleiten der Kombination aus den Bewegungen in Querrichtung und Längsrichtung, um die nachfolgende Aufnahme vorzubereiten, - dem Stoppen der Bewegung des Sammlers (40) in Querrichtung und seiner Bewegung in Längsrichtung im Moment des Auftreffens.

3. - Verfahren zum Gruppieren von Produkten gemäß Anspruch 2, **dadurch gekennzeichnet, dass** es aus der Aufnahme der Produkte (2) nacheinander, an unterschiedlichen Stellen auf der zuführenden Fördereinrichtung (1) besteht, wobei die Stellen beim Herauffahren an den aufgereihten Produkten mit dem gleichen Abstand zwischen zwei aufeinanderfolgenden Stellen versetzt sind.

4. - Verfahren zum Gruppieren von Produkten gemäß Anspruch 3, **gekennzeichnet dadurch, dass** es, wenn der Sammler (40) vollständig aufgefüllt ist, besteht aus - dem Verschieben des Sammlers (40) mit seinen aufgenommenen Produkten (2) in Querrichtung, um letztere der Stelle (10) zum Abstellen zuzuführen, an einer Führung oder in einer gleichmäßigen kammförmigen Aufnahmestruktur, danach - dem Verschieben des Sammlers (40), zu einem ersten Zeitpunkt parallel zu der die Produkte (2) zuführenden Fördereinrichtung (1), um die Reihe und das erste aufzunehmende Produkt zu überholen und danach zu einem zweiten Zeitpunkt in Längsrichtung und in Querrichtung, zum Zurückführen des Sammlers (40) auf die Höhe der ersten Aufnahmestelle.

5. - Verfahren zum Gruppieren von Produkten gemäß Anspruch 4, **dadurch gekennzeichnet, dass** es daraus besteht, die Produkte (2), die von dem Sammler (40) auf ein und derselben Seite der zuführenden Fördereinrichtung (1) aufgenommen worden sind, oberhalb der Höhe der letzten Aufnahmestelle der Produkte (2) abzulegen.

6. - Verfahren zum Gruppieren von Produkten gemäß Anspruch 4, **dadurch gekennzeichnet, dass** es daraus besteht, die Produkte (2), die von dem Sammler (40) alternativ auf der in Bewegungsrichtung rechten Seite und auf der in Bewegungsrichtung linken Seite der zuführenden Fördereinrichtung aufgenommen worden sind, abzulegen.

7. - Verfahren zum Gruppieren von Produkten gemäß Anspruch 1, **dadurch gekennzeichnet, dass** es daraus besteht, mehrere Reihen der Produkte (2) in angrenzender Weise mit einem Versatz in Querrichtung abzustellen, vor dem Durchführen ihrer Umgruppierung und ihrer gemeinsamen Entnahme mit zweckmäßigen roboterartigen (45) oder anderen Mitteln, beispielsweise mit dem Ziel sie in einen Kasten zu stellen.

8. - Vorrichtung zum Umsetzen des Verfahrens zum Gruppieren von Flaschen oder anderen Produkten, aufweisend:
- mindestens einen als Boden dienender Tisch (3), der auf der Höhe und neben der zuführenden Fördereinrichtung (1) der aufzunehmenden Produkte (2) angeordnet ist, um die aufgenommenen Produkte aufzunehmen,
- einen kammförmigen Sammler (40), in Bezug zur Förderrichtung der Produkte (2) in Querrichtung bewegbar oberhalb des Tischs (3) angeordnet,
- einen zweckmäßigen Aufbau, um den Sammler (40) zu tragen und in Bezug zu und oberhalb von der zuführenden Fördereinrichtung (1) und des Tisches (3) in Längsrichtung und in Querrichtung zu verschieben, **dadurch gekennzeichnet, dass** der Sammler einen Winkel a zwischen 60 und 120 in Bezug zur Längsachse der die Produkte (2) zuführenden Fördereinrichtung bildet, und **dadurch**, dass die Vorrichtung Mittel zum Detektieren der Präsenz von einem auf der zuführenden Fördereinrichtung (1) aufzunehmenden Produkt (2) aufweist, wobei die Mittel in der Bewegungsrichtung aufwärts zum Sammler (40) angeordnet sind und sich mit dem letzteren in Längsrichtung bewegen.

9. - Vorrichtung gemäß Anspruch 8, **dadurch gekennzeichnet, dass** der Annahmetisch (3) für die aufgenommenen Produkte (21 bis 26) aus zwei Platten (31, 32) gebildet wird, die sich beiderseits von der zuführenden Fördereinrichtung (1) erstrecken, um eine Entnahme der an den beiden Seiten der Fördereinrichtung (1) aufgenommenen Produkte (21 bis 26) zu ermöglichen.

10. - Vorrichtung gemäß Anspruch 8, **dadurch gekennzeichnet, dass** der Sammler Zellen (42) aufweist, deren Form genau mit der der aufzunehmenden Produkte (2) korrespondiert, um im Fall erhöhter Arbeitstakte die Risiken des Abprallens eines auf der Fördereinrichtung aufgenommenen Produkts zu begrenzen, wenn das Produkt in seiner Zelle platziert wird, wobei sich die Zellen entlang einer Achse erstrecken, die einen Winkel zwischen 60 und 120 in Bezug zur Ausrichtung der Eintrittslinie der Zellen bildet.

11. - Vorrichtung gemäß Anspruch 10, **dadurch gekennzeichnet, dass** der Sammler Zellen aufweist, deren Tiefe in Längsrichtung die Aufnahme mehrerer Produkte (2) ermöglicht, die sich für eine Umgruppierung in Längsrichtung eignen.

12. - Vorrichtung gemäß Anspruch 8, **dadurch gekennzeichnet, dass** sie mindestens einen Roboter (45) zur Übernahme der Produkte (2), Flaschen oder andere aufgereihte Produkte, aufweist, wobei der Roboter einen Aufnahmekopf aufweist, um mehrere Reihen der Produkte (2), Flaschen oder andere, zu greifen und sie in Kästen auf einer Fördereinrichtung (43) zu stellen, die zweckmäßig in der Nähe des Aufnahmetischs (3) angeordnet ist.

13. - Vorrichtung gemäß Anspruch 8, **dadurch gekennzeichnet, dass** sie einen Tisch (3) zur Aufnahme von Produkten (2), Flaschen oder andere, aufweist, der aus einem endlosen Teppichförderband (46) gebildet wird, wobei das Förderband (46) geführt wird, um den Sammler bei seiner Bewegung zu begleiten und die Produkte (2) zu übernehmen, um eine Aufnahmeart sicherzustellen.

14. - Vorrichtung gemäß Anspruch 13, **dadurch gekennzeichnet, dass**, für den Fall des "wrap around" Verpackens der Lose der Produkte (2) in einer Kiste (44'), die Vorrichtung eine in Querrichtung angeordnete Schiebevorrichtung (50) aufweist, wobei die Schiebevorrichtung das Los der Produkte (2) auf die Verpackungssystem-Fördereinrichtung (43') schiebt.
